# EUROPEAN PATENT SPECIFICATION

(11) **EP 3 943 373 B1**
(45) Date of publication and mention of the grant of the patent: **12.03.2025**
(21) Application number: 20187693.5
(22) Date of filing: 24.07.2020
(51) Int. Cl.: B62J 43/23, B62J 43/10, B62H 5/00, B62K 3/00, B62K 19/40, B60L 50/64, B60L 53/80, H01M 50/249, H01M 50/262

(54) **ELECTRIC SCOOTER WITH BATTERY DOCK**
ELEKTRISCHER ROLLER MIT BATTERIEDOCK
TROTTINETTE ÉLECTRIQUE DOTÉE D'UN SOCLE D'ACCUEIL DE BATTERIE

(43) Date of publication of application: 26.01.2022
(73) Proprietor: TIER Mobility SE, 10969 Berlin (DE)
(72) Inventor: Kalligeros, Georgios, London SW1H 0BH (GB)
(74) Representative: Zimmermann & Partner Patentanwälte mbB

(56) References cited:
- CN-A- 109 927 829
- CN-A- 110 203 318
- CN-U- 209 700 845
- CN-U- 210 063 206
- CN-U- 210 618 344
- DE-C1- 4 308 296
- US-A1- 2013 027 183
- US-A1- 2020 212 395

## Description

### TECHNICAL FIELD

Embodiments of the present disclosure relate generally to electric scooters, which are powered by batteries.

### BACKGROUND

Scooters are wheeled devices used for individual transportation. A conventional scooter has a running board on which the user stands. The running board is supported by at least two wheels, one at the front and one at the rear. The front wheel may be steerable by means of a handle bar, which is connected to the front wheel through a steering shaft. The scooter is typically operated by holding the handle bar with two hands, placing one foot on the running board, and pushing with the other foot to propel the scooter.

Recently, motorized scooters also known as electric scooters or e-scooters have become available. In these types of devices, the motor is usually attached to the rear wheel of the scooter. An e-scooter may be used similar to a conventional scooter during the kick-off phase. The motor may start driving the wheel or wheels after a certain minimum speed is reached.

Scooters are often provided by a company in public areas and users can book scooters for individual transportation.

The motor of the scooter is usually powered by a battery. Once the battery of the scooter is empty, the battery has to be charged or changed. Battery charging is one of the main issues of personal mobility vehicles. Documents CN 210063206 U, US 2020212395 A1, CN 110203318 A, CN 209700845 U, US 2013027183 A1, CN 210618344 U and CN 109927829 A relate to devices used for individual transportation having an electric motor and a battery. Said document CN 210063206 U discloses a system comprising:
- an electric scooter comprising a support frame with a support surface configured to support a standing user, a front wheel and a rear wheel, a steering shaft connected to the support frame and to the front wheel for steering the electric scooter, an electric motor configured to drive at least one of the wheels, and a battery dock for at least partially receiving a battery,
- the battery, wherein the battery is configured to supply power to the motor, wherein the battery is releasably at least partially received in the battery dock, and
- a locking mechanism configured to lock and unlock the battery, wherein unlocking of the locking mechanism is electrically powered.

### SUMMARY

The invention is defined by the appended claims und comprises a system as defined in claim 1 and a method for operating an e-scooter as defined in claim 14.

According to a preferred embodiment, the battery is removable from the battery dock by a lifting motion in an at least partially upward direction perpendicular to the support surface.

According to the invention, the locking mechanism is configured to unlock the battery, wherein unlocking of the locking mechanism is electrically powered. Specifically, the electric scooter can further comprise a controller configured to unlock the locking mechanism.

According another aspect, the method can comprise: - removing the battery from the battery dock by a lifting motion in an at least partially upward direction perpendicular to the support surface.

### BRIEF DESCRIPTION OF THE DRAWINGS

These and other features, aspects, and advantages are described below with reference to drawings of an example embodiment, which are intended to illustrate, but not to limit, the present disclosure.
- Fig. 1: shows a system with an electric scooter and a battery;
- Fig. 2: shows a portion of an electric scooter with a battery dock and a battery and a motion of the battery, when the battery is removed from the battery dock;
- Fig. 3: shows a portion of an electric scooter, a battery dock and a battery;
- Fig. 4: shows a battery;
- Fig. 5: shows a locking mechanism;
- Fig. 6: shows a portion of a locking mechanism;
- Fig. 7: shows a cut through a battery dock; and
- Fig. 8: shows a battery dock.

Reference will now be made in detail to the various embodiments, one or more examples of which are illustrated in each figure.

Within the following description of the drawings, the same reference numbers refer to the same or to similar components.

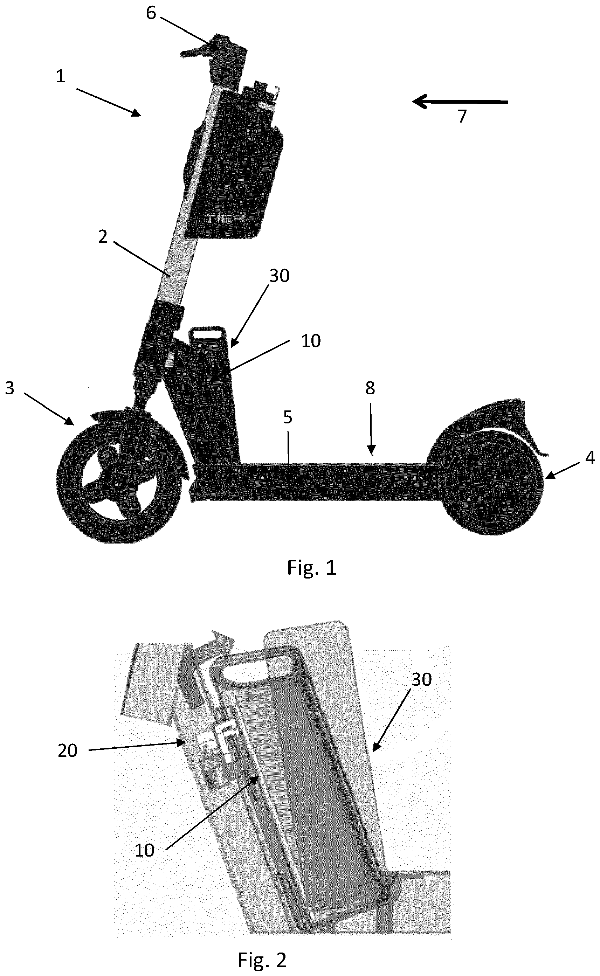

With exemplary reference to Fig. 1, a scooter 1 comprises a support frame 5 including a support surface 8 configured to support a user, at least a first and a second wheel 3, 4, and a steering shaft 2 connected to at least one wheel 3, 4 for steering the scooter 1. The scooter 1 is an electric scooter (e-scooter) and further comprises a motor. Fig. 1 also shows a battery dock 10 and a battery 30, wherein the battery 30 supplies power to the motor and wherein at least one wheel 3, 4 can be driven by the motor. Typically, the rear wheel 4 is driven by the motor (not shown). The maximum speed of the scooter can be for example, 20 km/h.

The wheels 3, 4 comprise a front wheel 3 and a rear wheel 4 as shown in Fig. 1. The front wheel 3 can be disposed on a first end of the support frame 5 and the second wheel can be disposed on a second end of the support frame 5 opposite the first end. The front wheel 3 is connected to the steering shaft 2.

The scooter 1 can have further features like, for example, one or more brakes, front and/or rear lights, one or more controllers, a locking mechanism and one or more suspensions at the wheels.

The scooter 1 has a driving direction 7 which is in Fig. 1 from right to left. The angle of the steering shaft 2 relative to the ground or the driving direction is tilted compared to a right angle. For example, the angle between the steering shaft 2 and the ground can be between 75° and 82°. In other words, the rotation axis of the steering shaft 2 has a tilt between 8° and 15°. The tilt can have a positive influence on the driving behavior, especially on the mass distribution. A high mass close to the rotation axis of the steering shaft 2 has a positive influence on the driving experience of a user. Specifically, as shown in Fig. 1, the rotation axis of the steering shaft 2 is tilted towards the battery 30 and the support surface 8 on which a user stands.

The system according to an aspect of the present invention is exemplary shown in Fig. 1 comprising: an electric scooter 1 comprising a support frame 5 with a support surface 8 configured to support a user, at least a first and a second wheel 3, 4, a steering shaft 2 connected the support frame 5 and to at least one wheel 3 for steering the electric scooter 1, an electric motor configured to drive at least one of the wheels 3, 4, and a battery dock 10 for at least partially receiving a battery 30. The system further comprises a battery 30, wherein the battery 30 is configured to supply power to the motor (not shown), wherein the battery 30 is releasable at least partially received in the battery dock 10. The system further comprises a locking mechanism 20 configured to lock the battery 30 in the battery dock 10.

In some examples, locking mechanism 20 is part of the scooter 1. In other examples, locking mechanism 20 is part of the battery 30. In further examples, locking mechanism 20 may be partially part of scooter 1 and partially part of battery 30.

According to an aspect the battery 30 is removable from the battery dock 10 by a lifting motion in an at least partially upward direction perpendicular to the support surface 8 which is exemplary illustrated in Fig. 2. The lifting motion may also include a direction parallel to the support surface 8. The motion may include a sliding of the battery 30 into the battery dock 10. A user can remove the battery 30 easily without additional tools and without turning the scooter into an unusual position, for example, upside down. Specifically, the battery 30 can be removed from the battery dock 10 in the driving position of the scooter standing. This provides easy excess to the battery 30 for the users of the scooter. Scooters are used outside and the bottom area of scooters are often covered with dirt and dust. Touching the bottom portion of the scooters or using additional tools which are often not available can be avoided with the present disclosure.

According to the invention, locking mechanism 20 is configured to unlock battery 30 from battery dock 10 with the locking mechanism 20 being electrically powered. Specifically, electric scooter 1 can further comprise a controller configured to unlock locking mechanism 20. Locking mechanism 20 prevents unwanted removal of the battery 30. Battery 30 may be removed for a battery exchange or a battery charge. For example a scooter may include a GPS tracker to track its location and to prevent the scooter from being stolen. The locking mechanism 20 engages the battery 30 with the scooter. Furthermore, the battery 30 shall not be removed while driving.

A controller may also communicate with a server to validate a request by a user to remove the battery. For example, scooter 1 may comprise a telematics unit, wherein the controller can communicate with a server via the telematics unit. A user may send a request to unlock the locking mechanism 20 or the battery, respectively, to a sever using a mobile device. The server validates the requests and send a signal to the controller upon which the controller unlocks the locking mechanism and the battery.

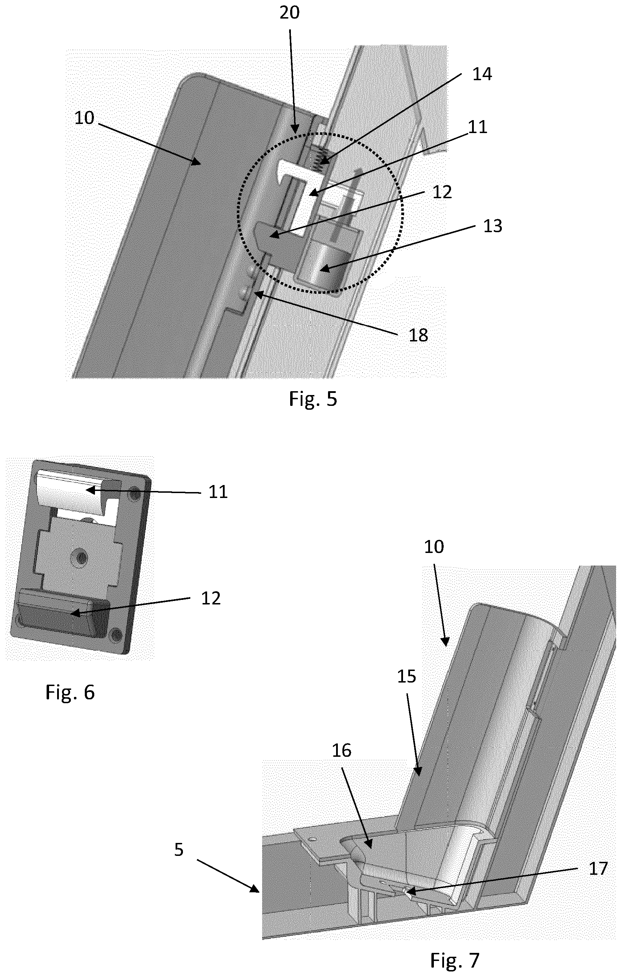

According to another aspect, locking mechanism 20 is configured to lock the battery 30 in the battery dock 10 without the locking mechanism 20 to be powered. Locking of the battery 30 in the battery dock 10 can be without electrical power required and can be manually done by a user. In other words, the locking mechanism may be a passive electronic lock mechanism. A more detailed example of the locking mechanism 20 is shown in Fig. 5.

The scooter has a driving direction 7 as shown in Fig. 1. According to the invention, driving direction 7 defines a front portion of the support frame 5 and a rear portion of the support frame 5, wherein the battery dock 10 is located in the front portion of the support frame 5. Since the battery 30 is usually a heavy part of the scooter, location of battery 30 can be an issue of balance. A location in the front portion of the support frame 5 close to the steering shaft 2 increases the balance behavior of the scooter.

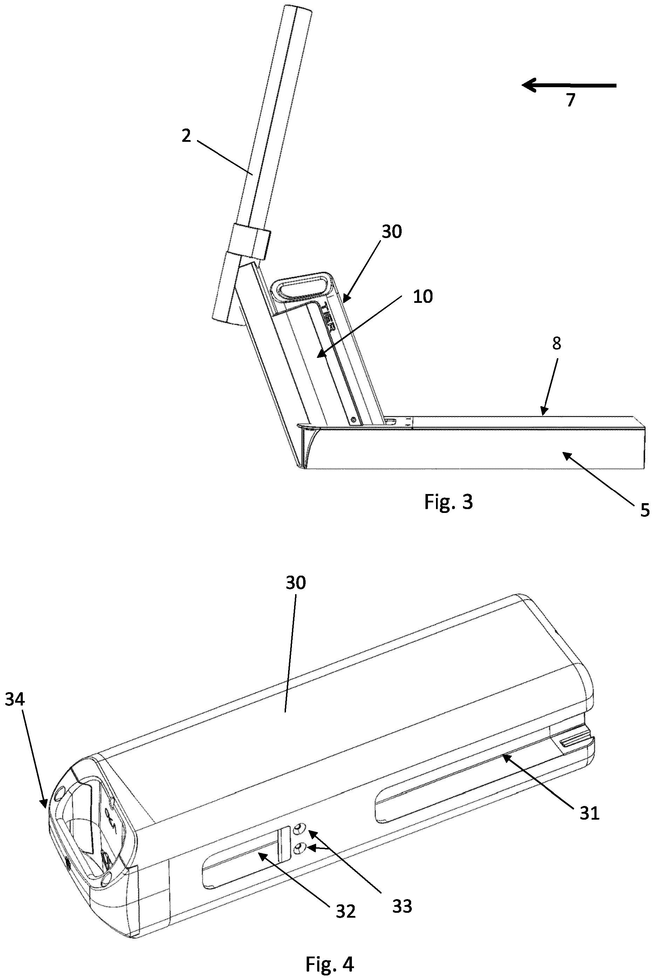

As best shown in the example of Fig. 3, the scooter has a driving direction 7 defining a front portion of the support frame 5 and a rear portion of the support frame. The front portion can be tilted relative to the rear portion in an angle of about 100° to 130°. The battery dock 10 can be at least partially located in the tilted front portion of the support frame 5. This location of the battery 30 is preferred for a better location of the center of mass of the scooter. In particular, the center of mass of the battery 30 is preferably close to the ground and close to the rotation axis of the front wheel 3.

As also best shown in Fig. 3, steering shaft 2 crosses a direct line upwardly from the battery 30. In other words, steering shaft 2 crosses an upward direction from the battery 30 perpendicular to the support surface 8. The rotation axis of steering shaft 2 is partially above battery 30.

According to an aspect, battery 30 has a handle 34 as best shown in Figs. 4 Specifically, handle 34 can be located on top of the battery 30 so that a user may grab handle 34 and remove battery 30 from battery dock 10 by a lifting motion in an at least partially upward direction. A handle may improve the usability of battery 30 since battery 30 may be heavy and not easy to lift for a user.

In some examples, battery 30 can have a length between 350 and 450 mm, a width between 60 and 100 mm and a thickness between 90 and 130 mm. The battery can have weight between 5 and 7 kg.

In some further examples, battery 30 may have a display configured to show the charge level of battery 30. Specifically, the display can be located on the top of battery 30 visible for a user standing on support surface 8.

The battery 30 is configured to supply power to the motor which is usually integrated in one of the wheels 3, 4 and not shown in the figures. Battery 30 can have electrical contacts located, for example, at the bottom. The battery 30 may further supply power other electrical components of the scooter, for example, a telematics unit, a GPS tracker, lights, and one or more controllers. In some examples, the battery has a capacity between 10 and 20 Ah, specifically between 12 and 15 Ah. The voltage of the battery can be between 35 and 55 V, wherein the voltage to charge and voltage to discharge may be different. In some examples, the battery has a power output of up to 0.7 kW. The battery can be a lithium battery.

As best seen in the example of Figs. 5 and 6, the locking mechanism 20 comprises a latch 11 configured to move between a locked position in which the battery 30 is locked in the battery dock 10 and an unlocked position in which the battery 30 is removable from the battery dock 10. The latch 11 may comprise a metal, specifically to be able to apply a holding force to the battery 30. Locking mechanism can also comprise a counter extension 12 as shown in Fig. 6, wherein latch 11 applies a holding force through the battery 30 against the counter extension 12.

Locking mechanism 20 is configured to lock and unlock battery 30, wherein unlocking of the locking mechanism 20 is electrically powered. Locking mechanism 20 may comprise an electric actuator 13 configured to move the latch 11 from the locked position to the unlocked position as shown in Fig. 5. The electric actuator 13 may be, for example, a solenoid or a linear motor.

According to an aspect, locking mechanism 20 is not accessible for a user when the battery is at least partially received in the battery dock 10 as shown in Fig. 5. This is a protection so that the locking mechanism 20 cannot be manipulated by a not authorized user. In particular, locking mechanism 20 can be located between battery dock 10 and battery 30.

As best shown in Fig. 4, battery 30 can has a recess 32 configured to engage with latch 11 of locking mechanism 20. However, in other examples, latch 11 may be part of battery 30 and recess 32 may be part of battery dock 10.

According to aspect, the locking mechanism 20 comprises a locking spring 14 configured to hold the latch 11 in the locked position as shown in Fig. 5. The spring requires no electrical power.

The locking mechanism 20 may be a snap-fit mechanism, which can be electrically unlocked.

The electric scooter 1 can further comprise a controller (no shown) configured to unlock the locking mechanism 20. Specifically, the controller may be configured to control electric actuator 13. In some examples, the controller is also configured to control other functions of the scooter 1.

The scooter may comprise a telematics unit, wherein the controller is configured to communicate to a server via the telemetric unit. The server may send a signal to the controller, via the telemetric unit, upon which the controller unlocks the locking mechanism 20.

As best shown in Fig. 5 and 6, locking mechanism 20 can be firmly attached to and/or partially integrated in the support frame 5 of the electric scooter 1. For example, locking mechanism 20 can be attached to the support frame 5 with screws or can be welded to the support frame 5.

As best shown in Fig. 7, battery dock 10 is partially integrated in the support frame 5 of the electric scooter 1 and partially extends upwardly from the support frame 5. Fig. 7 shows a cut through battery dock 10. Battery dock 10 can comprise a support frame 15 which extends upwardly from support frame 5 of the electric scooter and a hollow base 16 integrated in support frame 5 of the electric scooter 1. Support frame 15 of battery dock 10 can be welded to support frame 5 of scooter 1. Locating battery 30 partially in support frame 5 of the electric scooter moves the center of mass in a preferred position and provides a stable position for battery 30.

As best shown in Fig. 7, hollow base 16 may have an opening 17 in which electrical contacts of scooter 1 and of battery 30 may be connected. Battery 30 can have electrical contacts (not shown) at its bottom. Hollow base 16 of the battery dock 10 may further have a hole at the bottom to allow water to escape the hollow base 16.

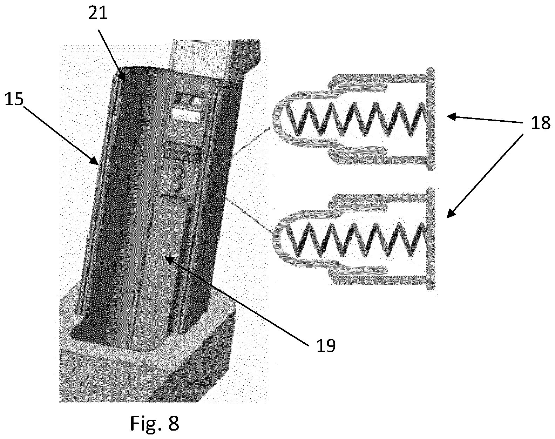

As best shown in Fig. 8, battery dock 10 may comprises one or more ejection springs 18 configured to eject battery 30 from battery dock 10. Ejection springs 18 can improve the removal of battery 30 and make it easier for the user to see if the battery 30 is unlocked and ejected or if battery 30 is still locked by locking mechanism 20. Specifically, ejection springs 18 may be configured to eject battery 30 from battery dock 10 and move battery 30 by at least 1 cm, specifically by at least 2 cm. As best shown in Fig. 4, battery 30 may have one or more recesses 33 configured to engage with ejection springs 18.

According to an aspect, ejection spring 18 ejects battery 30 immediately after locking mechanism 20 unlocks battery 30. Therefore, the electric actuator 13 can be deactivated after a short time which is positive for the power consumption. Specifically, if electric actuator 13 is powered by battery 30, electric actuator 13 will not be powered anyway after battery 30 is ejected.

As best shown in Figs. 4 and 8, battery 30 can have a groove 31 and battery dock 10 can have a corresponding extension 19 which together create a form fit. Groove 31 and extension 19 may increase stability of battery 30 in battery dock 10. In other examples, battery 30 may have the extension and battery dock 10 may have the groove.

As best shown in Figs. 8 battery dock 10 can have two opposing side covers which at least partially enclose the sides of the battery 30. Battery is partially received between side covers.

As also best shown in Figs. 8, battery dock 10 can have a support frame 15 and an inner liner 21, wherein the support frame 15 comprises a metal and the inner liner 21 comprises a plastic. While support frame 15 provides stability, inner liner 21 comprises a softer material to be in direct contact with battery 30. Inner liner 21 is configured as a damping for battery 30 in battery dock 10 and prevents impacts on the outer side of battery dock 10 to damage battery 30.

A method for operating an electric scooter is also suggested. The electric scooter (e-scooter) can be any scooter 1 using any battery 30 disclosed herein.

The method comprises: - providing an electric scooter 1 comprising a support frame 5 with a support surface 8 configured to support a user, at least a first and a second wheel 3, 4, a steering shaft 2 connected the support frame 5 and to at least one wheel 3 for steering the electric scooter 1, an electric motor configured to drive at least one of the wheels 3, 4, and a battery dock 10 for at least partially receiving a battery; - providing a battery 30, wherein the battery 30 is configured to supply power to the motor, wherein the battery 30 is releasably at least partially received in the battery dock 10; - providing a locking mechanism 20 configured to lock the battery 30 in the battery dock 10.

The method further comprises: unlocking the locking mechanism 20, wherein the unlocking of the locking mechanism is electrically powered. In other words, electrically unlocking the locking mechanism 20.

According to an aspect, the method may comprise: - removing the battery 30 from the battery dock 10 by a lifting motion in an at least partially upward direction perpendicular to the support surface 8 as shown in Fig. 2, specifically, removing the battery 30 from the battery dock 10 by a lifting motion in an at least partially upward direction perpendicular to the support surface 8 and in a direction parallel to the support surface 8. The parallel direction may be the direction opposing the driving direction.

Scooters are often provided by a company in public areas for public transport as individual transportation vehicles. Users can book scooters for individual transportation. In some examples, the method includes: - receiving a request to unlock the battery 30 sent by a mobile device of a user; - validating the request; - sending a signal to the controller upon which the controller unlocks the locking mechanism 20. Specially, the request to unlock the battery 30 sent by a mobile device of a user can be received by a server, which also validates the request. Sending a signal to the controller can be done via the telemetric unit. A mobile device is typically a smart phone or tablet device. Connection to the server from the mobile device may be via the internet and can be provided with a software application (app) on the mobile device.

Unlocking the locking mechanism 20 electrically powered may comprise pushing latch 11 with linear actuator 13. Specifically, linear actuator 13 also pushes against tension spring 14. After latch 11 releases battery 30, ejection springs 18 may push battery 30 towards in an ejected position.

In the ejected position, linear actuator 13 may stop pushing latch 11. Tension spring 14 will accordingly push latch 11 back to the locked position, wherein the battery 30 is not locked.

Battery 30 can be locked again by pushing it against latch 11 which will lead latch 11 to move temporary in the unlocked position. This is a snap-fit mechanism. In particular, battery 30 is resting on ejection springs 18, in ejected position. A user presses battery 30 is against ejection springs 18 and forces latch 11 towards unlocked position while compressing tension spring 14. Ejection springs 18 get fully compressed and latch 11 moves into locked position, wherein tension spring 14 pushes latch 11 into locked position and holds it in locked position.

### REFERENCE NUMBERS

- 1: scooter
- 2: steering shaft
- 3: front wheel
- 4: rear wheel
- 5: support frame
- 6: handle bar
- 7: driving direction
- 8: support surface

- 10: battery dock
- 11: latch
- 12: extension
- 13: actuator
- 14: tension spring
- 15: support frame
- 16: hollow base
- 17: opening
- 18: ejection spring
- 19: extension
- 20: locking mechanism
- 21: inner liner

- 30: battery
- 31: groove
- 32: recess
- 33: recess
- 34: handle

## Claims

1. A system comprising:
an electric scooter (1) comprising a support frame (5) with a support surface (8) configured to support a standing user, a front wheel (3) and a rear wheel (4), a steering shaft (2) connected to the support frame (5) and to the front wheel (3) for steering the electric scooter (1), an electric motor configured to drive at least one of the wheels (3, 4), and a battery dock (10) for at least partially receiving a battery,
the battery (30), wherein the battery (30) is configured to supply power to the motor, wherein the battery (30) is releasably at least partially received in the battery dock (10), and
a locking mechanism (20) configured to lock and unlock the battery (30), wherein unlocking of the locking mechanism (20) is electrically powered,
**characterized in that**
the battery dock (10) is partially integrated in the support frame (5) of the electric scooter (1) and partially extends upwardly from the support frame (5), wherein the battery (30) is partially located in the support frame (5), wherein the electric scooter (1) has a driving direction (7) defining a front portion of the support frame (5) and a rear portion of the support frame (5), the battery dock (10) being located in the front portion of the support frame (5), wherein the steering shaft (2) has a rotation axis, the rotation axis of the steering shaft (2) being tilted towards the battery (30) and the support surface (8) of the support frame (5), wherein the rotation axis of the steering shaft (2) extends partially above the battery (30) so that the steering shaft (2) crosses a line extending in an upward direction from the battery (30) perpendicular to the support surface (8).

2. The system of claim 1, wherein the locking mechanism (20) is not accessible for the user when the battery is at least partially received in the battery dock (10).

3. The system according to any preceding claims, wherein the locking mechanism (20) is configured to lock the battery (30) in the battery dock (10) without the locking mechanism (20) to be powered.

4. The system according to any preceding claims, wherein the battery (30) is removable from the battery dock (10) by a lifting motion in an at least partially upward direction perpendicular to the support surface (8).

5. The system according to any preceding claims, wherein the locking mechanism (20) comprises a latch (11) configured to move between a locked position in which the battery (30) is locked in the battery dock (10) and an unlocked position in which the battery (30) is removable from the battery dock (10).

6. The system according to claim 5, wherein the locking mechanism (20) comprises an electric actuator (13) configured to move the latch (11) from the locked position to the unlocked position.

7. The system according to claim 6, wherein the electric actuator (13) is a solenoid.

8. The system according to claim 6, wherein the electric actuator (13) is a linear motor.

9. The system according to any of claims 5 to 8, wherein the locking mechanism (20) comprises a locking spring (14) configured to hold the latch (11) in the locked position.

10. The system according to any preceding claims, wherein the electric scooter (1) further comprises a controller configured to unlock the locking mechanism (20).

11. The system according to any preceding claims, wherein the locking mechanism (20) is firmly attached to and/or partially integrated in the support frame (5) of the electric scooter (1).

12. The system according to any preceding claims, wherein the battery dock (10) comprises one or more ejection springs (18) configured to eject the battery (30) from the battery dock (10).

13. The system according to any preceding claims, wherein the battery (30) has a handle (34).

14. A method for operating an e-scooter, comprising:
- providing an electric scooter (1) comprising a support frame (5) with a support surface (8) configured to support a standing user, at least a front wheel (3) and a rear wheel (4), a steering shaft (2) connected to the support frame (5) and to the front wheel (3) for steering the electric scooter (1), an electric motor configured to drive at least one of the wheels (3, 4), and a battery dock for at least partially receiving a battery, wherein the battery dock (10) is partially integrated in the support frame (5) of the electric scooter (1) and partially extends upwardly from the support frame (5), wherein the battery (30) is partially located in the support frame (5), wherein the electric scooter (1) has a driving direction (7) defining a front portion of the support frame (5) and a rear portion of the support frame (5), the battery dock (10) being located in the front portion of the support frame (5), wherein the steering shaft (2) has a rotation axis, the rotation axis of the steering shaft (2) being tilted towards the battery (30) and the support surface (8) of the support frame (5), wherein the rotation axis of the steering shaft (2) extends partially above the battery (30) so that the steering shaft (2) crosses a line extending in an upward direction from the battery (30) perpendicular to the support surface (8);
- providing the battery, wherein the battery is configured to supply power to the motor, wherein the battery is releasably at least partially received in the battery dock (10);
- providing a locking mechanism (20) configured to lock the battery (30) in the battery dock (10); and
- unlocking the locking mechanism (20), wherein the unlocking of the locking mechanism is electrically powered.

## Patentansprüche

1. Ein System, das aufweist:
einen Elektroroller (1), der einen Stützrahmen (5) mit einer Stützfläche (8) aufweist, die so konfiguriert ist, dass sie einen stehenden Benutzer trägt, ein Vorderrad (3) und ein Hinterrad (4), eine Lenkwelle (2), die mit dem Stützrahmen (5) und dem Vorderrad (3) verbunden ist, um den Elektroroller (1) zu lenken, einen Elektromotor, der derart konfiguriert ist, dass er mindestens eines der Räder (3, 4) antreibt, und ein Batteriedock (10) um zumindest teilweise eine Batterie aufzunehmen,
die Batterie (30), wobei die Batterie (30) derart konfiguriert ist, dass sie den Motor mit Strom versorgt, wobei die Batterie (30) lösbar zumindest teilweise im Batteriedock (10) aufgenommen ist, und
einen Verriegelungsmechanismus (20), der derart konfiguriert ist, um die Batterie (30) zu verriegeln und zu entriegeln, wobei das Entriegeln des Verriegelungsmechanismus (20) elektrisch betrieben wird ,
**dadurch gekennzeichnet, dass** das Batteriedock (10) teilweise in den Stützrahmen (5) des Elektrorollers (1) integriert ist und sich teilweise von dem Stützrahmen (5) nach oben erstreckt, wobei die Batterie (30) teilweise in dem Stützrahmen (5) angeordnet ist, wobei der Elektroroller (1) eine Fahrtrichtung (7) aufweist, die einen vorderen Abschnitt des Stützrahmens (5) und einen hinteren Abschnitt des Stützrahmens (5) definiert, wobei das Batteriedock (10) in dem vorderen Abschnitt des Stützrahmens (5) angeordnet ist, wobei die Lenkwelle (2) eine Rotationsachse aufweist, wobei die Rotationsachse der Lenkwelle (2) in Richtung der Batterie (30) und der Stützfläche (8) des Stützrahmens (5) geneigt ist, wobei sich die Rotationsachse der Lenkwelle (2) teilweise oberhalb der Batterie (30) erstreckt, so dass die Lenkwelle (2) eine Linie kreuzt, die sich in einer Aufwärtsrichtung von der Batterie (30) senkrecht zu der Stützfläche (8) erstreckt.

2. System nach Anspruch 1, wobei der Verriegelungsmechanismus (20) für den Benutzer nicht zugänglich ist, wenn die Batterie zumindest teilweise im Batteriedock (10) aufgenommen ist.

3. Das System nach einem der vorhergehenden Ansprüche, wobei der Verriegelungsmechanismus (20) so konfiguriert ist, dass er die Batterie (30) im Batteriedock (10) verriegelt, ohne dass der Verriegelungsmechanismus (20) mit Strom versorgt werden muss.

4. System nach einem der vorhergehenden Ansprüche, wobei die Batterie (30) aus dem Batteriedock (10) durch eine Hebebewegung in einer zumindest teilweise nach oben gerichteten Richtung senkrecht zur Stützfläche (8) entnehmbar ist.

5. System nach einem der vorhergehenden Ansprüche, wobei der Verriegelungsmechanismus (20) einen Riegel (11) umfasst, der so konfiguriert ist, dass er sich zwischen einer verriegelten Position, in der die Batterie (30) in dem Batteriedock (10) verriegelt ist, und einer entriegelten Position, in der die Batterie (30) aus dem Batteriedock (10) entfernt werden kann, bewegt.

6. System nach Anspruch 5, wobei der Verriegelungsmechanismus (20) ein elektrisches Stellglied (13) umfasst, das so konfiguriert ist, dass es den Riegel (11) von der verriegelten Position in die entriegelte Position bewegt.

7. System nach Anspruch 6, wobei das elektrische Stellglied (13) ein Solenoid ist.

8. System nach Anspruch 6, wobei das elektrische Stellglied (13) ein Linearmotor ist.

9. System nach einem der Ansprüche 5 bis 8, wobei der Verriegelungsmechanismus (20) eine Verriegelungsfeder (14) aufweist, die derart konfiguriert ist, dass sie den Riegel (11) in der verriegelten Position hält.

10. System nach einem der vorhergehenden Ansprüche, wobei der Elektroroller (1) ferner eine Steuerung umfasst, die derart konfiguriert ist, dass sie den Verriegelungsmechanismus (20) entriegelt.

11. System nach einem der vorhergehenden Ansprüche, wobei der Verriegelungsmechanismus (20) fest an dem Stützrahmen (5) des Elektrorollers (1) angebracht und/oder teilweise in diesen integriert ist.

12. System nach einem der vorhergehenden Ansprüche, wobei das Batteriedock (10) eine oder mehrere Auswurffedern (18) aufweist, die derart konfiguriert sind, dass sie die Batterie (30) aus dem Batteriedock (10) auswerfen.

13. System nach einem der vorhergehenden Ansprüche, wobei die Batterie (30) einen Griff (34) aufweist.

14. Verfahren zum Betrieb eines E-Scooters, umfassend:
- Bereitstellen eines Elektrorollers (1), der einen Stützrahmen (5) mit einer Stützfläche (8) aufweist, die derart konfiguriert ist, dass sie einen stehenden Benutzer trägt, mindestens ein Vorderrad (3) und ein Hinterrad (4), eine Lenkwelle (2), die mit dem Stützrahmen (5) und dem Vorderrad (3) zum Lenken des Elektrorollers (1) verbunden ist, einen Elektromotor, der derart konfiguriert ist, dass er mindestens eines der Räder (3, 4) antreibt, und ein Batteriedock zur zumindest teilweisen Aufnahme einer Batterie, wobei das Batteriedock (10) teilweise in den Stützrahmen (5) des Elektrorollers (1) integriert ist und sich teilweise von dem Stützrahmen (5) nach oben erstreckt, wobei die Batterie (30) teilweise in dem Stützrahmen (5) angeordnet ist, wobei der Elektroroller (1) eine Fahrtrichtung (7) aufweist, die einen vorderen Abschnitt des Stützrahmens (5) und einen hinteren Abschnitt des Stützrahmens (5) definiert, wobei das Batteriedock (10) in dem vorderen Abschnitt des Stützrahmens (5) angeordnet ist, wobei die Lenkwelle (2) eine Drehachse aufweist, wobei die Drehachse der Lenkwelle (2) in Richtung der Batterie (30) und der Stützfläche (8) des Stützrahmens (5) geneigt ist, wobei sich die Drehachse der Lenkwelle (2) teilweise über der Batterie (30) erstreckt, so dass die Lenkwelle (2) eine Linie kreuzt, die sich in einer Aufwärtsrichtung von der Batterie (30) senkrecht zu der Stützfläche (8) erstreckt;
- Bereitstellen der Batterie, wobei die Batterie derart konfiguriert ist, dass sie den Motor mit Energie versorgt, wobei die Batterie zumindest teilweise lösbar in dem Batteriedock (10) aufgenommen ist;
- Bereitstellen eines Verriegelungsmechanismus (20), der derart konfiguriert ist, dass er die Batterie (30) in dem Batteriedock (10) verriegelt; und
- Entriegeln des Verriegelungsmechanismus (20), wobei das Entriegeln des Verriegelungsmechanismus elektrisch betrieben wird.

## Revendications

1. Système comprenant :
une trottinette électrique (1) comprenant un cadre de support (5) avec une surface de support (8) configurée pour supporter un utilisateur debout, une roue avant (3) et une roue arrière (4), un arbre de direction (2) raccordée au cadre de support (5) et à la roue avant (3) pour diriger la trottinette électrique (1), un moteur électrique configuré pour entraîner au moins l'une des roues (3, 4), et un socle d'accueil de batterie (10) pour recevoir, au moins partiellement, une batterie,
la batterie (30), dans lequel la batterie (30) est configurée pour fournir l'alimentation au moteur, dans lequel la batterie (30) est reçue de manière amovible au moins partiellement dans le socle d'accueil de batterie (10), et
un mécanisme de verrouillage (20) configuré pour verrouiller et déverrouiller la batterie (30), dans lequel le déverrouillage du mécanisme de verrouillage (20) est alimenté par voie électrique,
**caractérisé en ce que** :
le socle d'accueil de batterie (10) est partiellement intégré dans le cadre de support (5) de la trottinette électrique (1) et s'étend partiellement vers le haut à partir du cadre de support (5), dans lequel la batterie (30) est partiellement positionnée dans le cadre de support (5), dans lequel la trottinette électrique (1) a une direction d'entraînement (7) définissant une partie avant du cadre de support (5) et une partie arrière du cadre de support (5), le socle d'accueil de batterie (10) étant positionné dans la partie avant du cadre de support (5), dans lequel l'arbre de direction (2) a un axe de rotation, l'axe de rotation de l'arbre de direction (2) étant incliné vers la batterie (30) et la surface de support (8) du cadre de support (5), dans lequel l'axe de rotation de l'arbre de direction (2) s'étend partiellement au-dessus de la batterie (30) de sorte que l'arbre de direction (2) croise une conduite s'étendant dans une direction ascendante à partir de la batterie (30) perpendiculaire à la surface de support (8).

2. Système selon la revendication 1, dans lequel le mécanisme de verrouillage (20) n'est pas accessible pour l'utilisateur lorsque la batterie est au moins partiellement reçue dans le socle d'accueil de batterie (10).

3. Système selon l'une quelconque des revendications précédentes, dans lequel le mécanisme de verrouillage (20) est configuré pour verrouiller la batterie (30) dans le socle d'accueil de batterie (10) sans que le mécanisme de verrouillage (20) ne soit alimenté.

4. Système selon l'une quelconque des revendications précédentes, dans lequel la batterie (30) peut être retirée du socle d'accueil de batterie (10) par un mouvement de levage dans une direction au moins partiellement ascendante perpendiculaire à la surface de support (8).

5. Système selon l'une quelconque des revendications précédentes, dans lequel le mécanisme de verrouillage (20) comprend un verrou (11) configuré pour se déplacer entre une position verrouillée dans laquelle la batterie (30) est verrouillée dans le socle d'accueil de batterie (10) et une position déverrouillée dans laquelle la batterie (30) peut être retirée du socle d'accueil de batterie (10).

6. Système selon la revendication 5, dans lequel le mécanisme de verrouillage (20) comprend un actionneur électrique (13) configuré pour déplacer le verrou (11) de la position verrouillée à la position déverrouillée.

7. Système selon la revendication 6, dans lequel l'actionneur électrique (13) est un solénoïde.

8. Système selon la revendication 6, dans lequel l'actionneur électrique (13) est un moteur linéaire.

9. Système selon l'une quelconque des revendications 5 à 8, dans lequel le mécanisme de verrouillage (20) comprend un ressort de verrouillage (14) configuré pour maintenir le verrou (11) dans la position verrouillée.

10. Système selon l'une quelconque des revendications précédentes, dans lequel la trottinette électrique (1) comprend en outre un organe de commande configuré pour déverrouiller le mécanisme de verrouillage (20).

11. Système selon l'une quelconque des revendications précédentes, dans lequel le mécanisme de verrouillage (20) est fermement fixé à et/ou partiellement intégré dans le cadre de support (5) de la trottinette électrique (1).

12. Système selon l'une quelconque des revendications précédentes, dans lequel le socle d'accueil de batterie (10) comprend un ou plusieurs ressorts d'éjection (18) configurés pour éjecter la batterie (30) du socle d'accueil de batterie (10).

13. Système selon l'une quelconque des revendications précédentes, dans lequel la batterie (30) a une poignée (34).

14. Procédé pour actionner une trottinette électrique comprenant les faits de :
prévoir une trottinette électrique (1) comprenant un cadre de support (5) avec une surface de support (8) configurée pour supporter un utilisateur debout, au moins une roue avant (3) et une roue arrière (4), un arbre de direction (2) raccordé au cadre de support (5) et à la roue avant (3) pour diriger la trottinette électrique (1), un moteur électrique configuré pour entraîner au moins l'une des roues (3, 4), et un socle d'accueil de batterie pour recevoir, au moins partiellement, une batterie, dans lequel le socle d'accueil de batterie (10) est partiellement intégré dans le cadre de support (5) de la trottinette électrique (1) et s'étend partiellement vers le haut à partir du cadre de support (5), dans lequel la batterie (30) est partiellement positionnée dans le cadre de support (5), dans lequel la trottinette électrique (1) a une direction d'entraînement (7) définissant une partie avant du cadre de support (5) et une patrie arrière du cadre de support (5), le socle d'accueil de batterie (10) étant positionné dans la partie avant du cadre de support (5), dans lequel l'arbre de direction (2) a un axe de rotation, l'axe de rotation de l'arbre de direction (2) étant incliné vers la batterie (30) et la surface de support (8) du cadre de support (5), dans lequel l'axe de rotation de l'arbre de direction (2) s'étend partiellement au-dessus de la batterie (30) de sorte que l'arbre de direction (2) croise une conduite s'étendant dans une direction ascendante à partir de la batterie (30) perpendiculaire à la surface de support (8) ;
prévoir la batterie, dans lequel la batterie est configurée pour fournir l'alimentation au moteur, dans lequel la batterie est reçue de manière amovible au moins partiellement dans le socle d'accueil de batterie (10) ;
prévoir un mécanisme de verrouillage (20) configuré pour verrouiller la batterie (30) dans le socle d'accueil de batterie (10) ; et
déverrouiller le mécanisme de verrouillage (20), dans lequel le déverrouillage du mécanisme de verrouillage est alimenté par voie électrique.
